# EUROPEAN PATENT SPECIFICATION

(11) **EP 2 264 950 B1**
(45) Date of publication and mention of the grant of the patent: **31.12.2014**
(21) Application number: 09163165.5
(22) Date of filing: 18.06.2009
(51) Int. Cl.: H04L 12/46, H04L 12/721, H04L 12/753

(54) **Layer-2 Separation in bridged LANs**
Schicht-2 Trennung in bridged LANs
Séparation de couche-2 dans des LAN pontés

(43) Date of publication of application: 22.12.2010
(73) Proprietor: PacketFront Network Products AB, 164 40 Kista (SE)
(72) Inventor: Foster, Charles, Henley-on-Thames, Oxfordshire RG9 4LP (GB)
(74) Representative: Huang, Chongguang

(56) References cited:
- US-B1- 6 987 740
- DAVID ALLAN NIGEL BRAGG DINESH MOHAN NORTEL: "Simplified VPLS-PBB interworking via MMRP; draft-allan-mmrp-for-mac-i n-mac-00.txt" SIMPLIFIED VPLS-PBB INTERWORKING VIA MMRP; DRAFT-ALLAN-MMRP-FOR-MAC-I N-MAC-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 7 July 2008 (2008-07-07), XP015057260
- HOMCHAUDHURI M FOSCHIANO CISCO SYSTEMS S: "Cisco Systems' Private VLANs Scalable Security in a Multi-Client Environment; draft-sanjib-private-vlan-10.txt" CISCO SYSTEMS' PRIVATE VLANS SCALABLE SECURITY IN A MULTI-CLIENT ENVIRONMENT; DRAFT-SANJIB-PRIVATE-VLAN-10.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 10, 1 August 2008 (2008-08-01), XP015059855

## Description

### Technical field

This invention relates to methods and systems for enforcing proper Layer-2 separate of data frame forwarding in bridged LANs employing a spanning tree protocol.

### Background art

The OSI model for layered communications and computer network protocol designs comprises seven conceptual layers. These are:
Layer-7 - Application layer
Layer-6 - Presentation layer
Layer-5 - Session layer
Layer-4 - Transport layer
Layer-3 - Network layer
Layer-2 - Data Link layer
Layer -1 - Physical layer
   The application of a Structured Tree Protocol in Layer-2 is known from US6987740, and are discussed in an article titled "Simplified VPLS-PBB interworking via MMRP by DAVID ALLAN, NIGEL BRAGG and DINESH MOHAN, of Nortel Networks, which is an internet draft - INTERNET SOCIETY (ISOC) 4, RUE DES FALAISES CH- 1205 GENEVA, SWITZERLAND, 7 July 2008 (2008-07-07), XP015057260.

Layer-3 is the one in which performs the routing functions to transfer data from a source to a destination via one or more networks. Because of this routing function, it is also the layer in which much of the network security is implemented. In particular, Layer-3 can operate to prevent unauthorised contact with a user device since it is at this layer that the specific routing information is applied.

A development of the model allows the definition of virtual local area networks (VLANs) in which a number of host are logically connected to behave as if they were on the same physical network, even if they are not. VLANs are essentially a Layer-2 construct and often provide the possibility of direct host to host communication without leaving Layer-2. This can be problematic since it avoids the security implemented in Layer-3. To avoid the possibility of direct host to host communication in Layer-2, there have been various proposals to force data communication between hosts on the same Layer-2 domain to pass through Layer-3 so as to be subjected to the appropriate level of control. These include MAC-Forced Forwarding (MACFF), which uses a form of proxy ARP to reply to ARP requests, giving a router's MAC address to force all communication to go through the router so that appropriate forwarding decisions can be made. Another is the private VLAN approach described in US6741592. These methods each have disadvantages, whether in terms of communication overhead, or lack of broad commercial availability.

Many networks comprise a mesh network of connected Layer-2 bridges. This typically provides more than one possible data path between nodes. The Spanning Tree Protocol (STP) has been developed to provide a loop-free topology in such bridged LANs. STP determines a spanning tree data path within the bridged LAN, typically based on a least-cost path, and disables the links that are not part of this path, leaving a single active path between the nodes. The start of such a path is typically called a root bridge. Ports on nodes facing the root bridge are known as root ports; ports on nodes facing away from the root bridge are know as designated ports. Disabled ports are known as blocked ports.

While many Layer-2 nodes are provided by simple switches, recent developments have provided programmable devices that can act as Layer-2 access elements to which clients or users can connect. An example of these is the ASR range of routers from PacketFront of Sweden.

In certain types of network, such as those known as Metro Ethernet networks, make functional distinctions between the operation of ports on devices according to whether then are customer-facing (User-Network Interface, or UNI) or between network service providers (Network-Network Interface, NNI). These definitions allow the device to apply the appropriate level of control for the data traffic flowing through these ports.

This invention is based on the use of configurable access elements to use the topology of an STP LAN to avoid direct host to host communication in Layer-2.

### Disclosure of the invention

A first aspect of this invention provides a method of forwarding data frames in a network comprising a bridged LAN connecting multiple access elements to which clients connect and which operates a spanning tree protocol, the method comprising :
operating the spanning tree protocol to provide a loop-free topology in the bridged LAN to determine a root bridge;
   - configuring ports on the access elements as either network-network interfaces for ports facing towards the root bridge, or user-network interfaces for ports facing away from the root bridge; and either
      (i) receiving a data frame at a network-network interface port of an access element and passing the data frame at least to user-network interfaces of the access element; or
      (ii) receiving a data frame at a user-network interface port of an access element and passing the data frame only to network-network interfaces of the access element.

The bridged LAN typically comprises a Layer-2 domain and is connected to a wider network by means of a distribution router, to which an access element of the Layer-2 domain is connected, the method comprising:
- setting the distribution router as the root bridge of the bridged LAN;
- receiving a data frame on a port of the distribution router from a network-network interface of an access element;
- forwarding the data frame to another network element outside the bridged LAN Layer-2 domain.

The configuration of the access elements and the forwarding of the data frames is preferably such that a data frame may not pass from one client connected to the bridged LAN to another client connected to the same bridged LAN without first being directed outside that bridged LAN.

A second aspect of the invention provides a system for implementing this method, comprising multiple access elements connected by means of a bridged LAN operating a spanning tree protocol, each access element having ports configured as either network-network interfaces for ports facing towards the root bridge, or user-network interfaces for ports facing away from the root bridge; and each access element operating such that a data frame received at a network-network interface port is passed at least to user-network interfaces of the access element; and a data frame received at a user-network interface port is passed only to network-network interfaces of the access element.

The access elements typically comprise programmable routers.

The clients can connect directly to user-network interfaces of the access elements.

Where the bridged LAN comprises distribution routers by which it is connected to a wider network, the distribution routers can be configured to forward any data frame received from an access element of the bridged LAN only to the wider network.

Further aspects of the will be apparent from the following description.

### Brief description of the drawings

Figure 1 shows a schematic view of a loop topology network;
Figure 2 shows the corresponding network to Figure 1 with port assignments according to an embodiment of the invention.

### Mode(s) for carrying out the invention

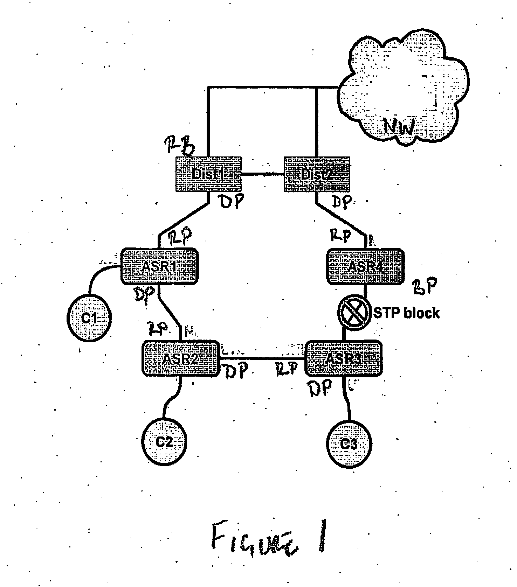

Figure 1 shows a schematic view of a simplied network of the type to which the invention relates. The network is in the form of a series of access elements ASR1-ASR4 logically connected in a loop to distribution routers Dist1, Dist2 which are themselves connected to each other and to a wider network NW providing functions such as DHCP server and Internet access. The loop topology provides for efficient communication paths and redundancy in the event of a link failure at some point in the network. Typical examples of the access elements are the ASR 4000 series of programmable routers from PacketFront of Sweden. Examples of the distribution routers are the ASR 5000 or ASR 10000 series of programmable routers, also from PacketFront.

Hosts or clients C1-C3 connect to this network by means of a connection between customer premise equipment and a port on the access element ASR.

STP is activated on ASR1-ASR4, Dist1 and Dist2. In the example shown here, Dist1 is set as the root bridge RB and a communication path to client C3 attached to ASR3 is needed. For each router, the port facing towards the root bridge RB is set as a root port RP. All ports facing away from the root bridge towards the target C3 are set as designated ports DP

STP normally works on the basis of least-cost path for a given communication path. In this example, there are two possible paths from client C3 attached to ASR3 to Dist1: (i) ASR3->ASR4->Dist2->Dist1; and (ii) ASR3->ASR2->ASR1-->Dist1. Both (i) and (ii) have the same number of segments but (i) is selected as the path to be used so a logical block STPblock is placed between ASR3 and ASR4. Therefore, instead of being a designated port, the port on ASR4 facing away from the root bridge becomes a blocked port BP.

As will be appreciated, there is nothing inherent in the approach that would not allow a path between C3 and C1 to be created that remained totally within the layer-2 topology.

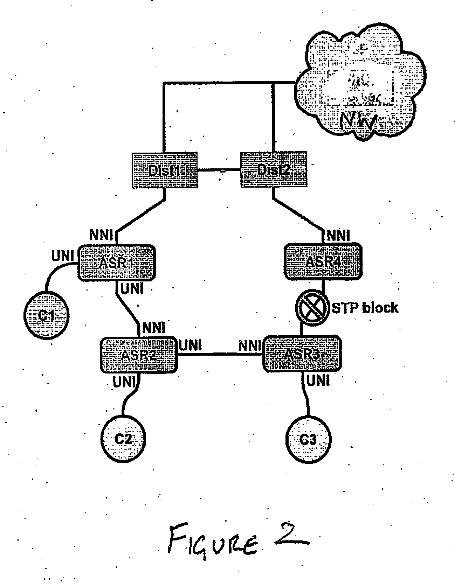

Figure 2 shows the port assignment when a method according to the invention is applied. Since all of the routers are programmable, the various ports can be configured in a way that allows rules to be applied by each router in turn to avoid this problem. The invention uses the User-Network Interface (UNI) and Network-Network Interface (NNI) definitions for ports commonly used in Metro Ethernet networks. In normal use, these definitions are used at the boundary between the network and user (UNI) and between service provider networks (NNI). However, in the case of the invention, these functions are applied within the loop topology to allow control to be applied to the data packets to ensure that they are passed in the correct direction. In the embodiment of Figure 2, the access routers ASR1-4 are programmed such that an STP root port is mapped to an NNI and an STP designated port or blocked port is mapped to a UNI. Thus, unlike normal UNI/NNI configurations, a router-to-router port can be a UNI or an NNI.

This solution allows the use of existing UNI/NNI port protection feature currently found in programmable routers such as the ASR4000. While UNI/NNI normally limits the frame flood vectors on a single element, in this invention, it is used in conjunction with STP to provide Layer-2 separation in an entire Layer-2 domain.

This solution sets UNI or NNI on the uplink ports depending on whether the port is facing upwards in the network or downwards. Upward facing ports, which sooner or later connecting to the rest of the network, the service providers and Internet, are trusted and set to NNI. Downward facing ports are set to UNI.

STP is used to figure out the direction of a port. If the STP role of a port is Root-Port, it is facing the root bridge, which must always be upwards in the network and thus is set to NNI. If the role is Designated-Port, it is facing downwards, and set to UNI.

After this is set up (automatically through the use of STP), the standard UNI/NNI flooding scheme is used. A frame coming in on an UNI port may only be flooded on NNI ports. A frame coming in on an NNI port may be flooded to both UNI and NNI ports.

Therefore, the distributed UNI/NNI system provides effective Layer-2 separation since a frame from a client arrives on a UNI port and is only flooded to NNI ports until it passes out of the loop and can be subjected to proper routing and filtering.

The distribution routers can be configured to apply filtering to bridged traffic to avoid passing a frame from one to the other and then back down the loop without filtering or separation

Other changes can be made within the scope of the invention as claimed.

## Claims

1. A method of forwarding data frames from an access element (ASR1, ASR2, ASR3, ASR4) in a network comprising a bridged LAN connecting multiple access elements (ASR1, ASR2, ASR3 and ASR4) to which clients (C1, C2, C3) connect and which operates a spanning tree protocol, the method comprising :
operating the spanning tree protocol to provide a loop-free topology in the bridged LAN to determine a root bridge (Dist1);
- configuring ports on the access element as either network-network interfaces for ports facing towards the root bridge, or user-network interfaces for ports facing away from the root bridge;
wherein the access element (ASR1, ASR2, ASR3, ASR4) is configured to
(i) when receiving a data frame at a network-network interface port of the access element (ASR1, ASR2, ASR3, ASR4), pass the data frame at least to user-network interfaces of the access element (ASR1, ASR2, ASR3, ASR4); and
(ii) when receiving a data frame at a user-network interface port of the access element (ASR1, ASR2, ASR3, ASR4), pass the data frame only to network-network interfaces of the access element (ASR1, ASR2, ASR3, ASR4).

2. A method as claimed in claim 1, wherein the bridged LAN comprises a Layer-2 domain and is connected to a network wider than the bridged LAN by means of a distribution router (Dist1, Dist2), to which an access element (ASR1, ASR4) of the Layer-2 domain is connected, the method comprising:
- setting the distribution router (Dist1, Dist2) as the root bridge of the bridged LAN;
- receiving a data frame on a port of the distribution router (Dist1, Dist2) from a network-network interface of an access element (ASR1, ASR4);
- forwarding the data frame to another network element outside the bridged LAN Layer-2 domain.

3. A method as claimed in claim 1, wherein the configuration of the access elements (ASR1, ASR2, ASR3 and ASR4) and the forwarding of the data frames is such that a data frame may not pass from one client (C1, C2, C3) connected to the bridged LAN to another client (C1, C2, C3) connected to the same bridged LAN without first being directed outside that bridged LAN.

4. A method as claimed in claim 2, wherein the configuration of the access elements (ASR1, ASR2, ASR3, ASR4) and the forwarding of the data frames is such that after forwarding the data frame to another network element (ASR1, ASR2, ASR3, ASR4) outside the bridged LAN Layer-2 domain a data frame may pass from one client (C1, C2, C3) connected to the bridged LAN to another client (C1, C2, C3) connected to the same bridged LAN.

5. A method as claimed in claim 1, 2, 3 or 4, comprising implementing a spanning tree protocol on the access elements (ASR1, ASR2, ASR3, ASR4) which designates ports as being root ports, designated ports or blocked ports, the step of implementation further comprising mapping a port configured as a network-network interface as a root port, and a port configured as a user-network interface as a designated port or a blocked port.

6. An access element (ASR1, ASR2, ASR3, ASR4) in a system comprising multiple access elements (ASR1, ASR2, ASR3, ASR4) connected by means of a bridged LAN operating a spanning tree protocol to determine a root bridge (Dist1),
the access element having ports configured as either network-network interfaces for ports facing towards the root bridge, or user-network interfaces for ports facing away from the root bridge (Dist1); and
wherein the access element is configured to operate such that a data frame received at a network-network interface port is passed at least to user-network interfaces of the access element (ASR1, ASR2, ASR3, ASR4); and a data frame received at a user-network interface port is passed only to network-network interfaces of the access element (ASR1, ASR2, ASR3, ASR4).

7. An access element (ASR1, ASR2, ASR3, ASR4) as claimed in claim 6, wherein the access element (ASR1, ASR2, ASR3, ASR4) comprises a programmable router.

8. A system comprising the access element (ASR1, ASR2, ASR3, ASR4) as claimed in claim 6 or 7, comprising multiple access elements (ASR1, ASR2, ASR3, ASR4) and clients connect directly to user-network interfaces of the access elements (ASR1, ASR2, ASR3, ASR4) in the system.

9. An access element as claimed in claim 6 or 7, or a system as claimed in claim 8, wherein the bridged LAN comprises distribution routers by which it is connected to a network wider than the bridged LAN, the distribution routers being configured to forward any data frame received from an access element (ASR1, ASR2, ASR3, ASR4) of the bridged LAN only to the wider network.

## Patentansprüche

1. Verfahren zum Weiterleiten von Datenrahmen von einem Zugangselement (ASR1, ASR2, ASR3, ASR4) in einem Netz, das ein überbrücktes LAN umfasst, das mehrere Zugangselemente (ASR1, ASR2, ASR3, ASR4) verbindet, mit denen sich Clients (C1, C2, C3) verbinden, und das ein Spanning Tree-Protokoll anwendet, wobei das Verfahren Folgendes umfasst:
das Anwenden des Spanning Tree-Protokolls, um eine schleifenfreie Topologie in dem überbrückten LAN bereitzustellen, um eine Root Bridge (Dist1) zu bestimmen,
das Konfigurieren von Ports an dem Zugangselement entweder als Netz-Netz-Schnittstellen für Ports, die zu der Root Bridge hin zeigen, oder als Anwender-Netz-Schnittstellen für Ports, die von der Root Bridge weg zeigen,
wobei das Zugangselement (ASR1, ASR2, ASR3, ASR4) dafür konfiguriert ist,
(i) wenn ein Datenrahmen an einem Netz-Netz-Schnittstellenport des Zugangselements (ASR1, ASR2, ASR3, ASR4) empfangen wird, den Datenrahmen wenigstens an Anwender-Netz-Schnittstellen des Zugangselements (ASR1, ASR2, ASR3, ASR4) zu übergeben, und
(ii) wenn ein Datenrahmen an einem Anwender-Netz-Schnittstellenport des Zugangselements (ASR1, ASR2, ASR3, ASR4) empfangen wird, den Datenrahmen nur an Netz-Netz-Schnittstellen des Zugangselements (ASR1, ASR2, ASR3, ASR4) zu übergeben.

2. Verfahren nach Anspruch 1, wobei das überbrückte LAN eine Layer-2-Domäne umfasst und mit Hilfe eines Verteilungsrouters (Dist1, Dist2), mit dem ein Zugangselement (ASR1, ASR4) der Layer-2-Domäne verbunden ist, mit einem Netz verbunden ist, das weiter als das überbrückte LAN ist, wobei das Verfahren Folgendes umfasst:
das Festsetzen des Verteilungsrouters (Dist1, Dist2) als die Root Bridge des überbrückten LAN,
das Empfangen eines Datenrahmens an einem Port des Verteilungsrouters (Dist1, Dist2) von einer Netz-Netz-Schnittstelle eines Zugangselements (ASR1, ASR4),
das Weiterleiten des Datenrahmens zu einem anderen Netzelement außerhalb der Layer-2-Domäne des überbrückten LAN.

3. Verfahren nach Anspruch 1, wobei die Konfiguration der Zugangselemente (ASR1, ASR2, ASR3 und ASR4) und das Weiterleiten des Datenrahmens derart sind, dass ein Datenrahmen nicht von einem Client (C1, C2, C3), der mit dem überbrückten LAN verbunden ist, zu einem anderen Client (C1, C2, C3), der mit dem gleichen überbrückten LAN verbunden ist, passieren kann, ohne zuerst nach außerhalb des überbrückten LAN geleitet zu werden.

4. Verfahren nach Anspruch 2, wobei die Konfiguration der Zugangselemente (ASR1, ASR2, ASR3, ASR4) und das Weiterleiten des Datenrahmens derart sind, dass nach dem Weiterleiten des Datenrahmens zu einem anderen Netzelement (ASR1, ASR2, ASR3, ASR4) außerhalb der Layer-2-Domäne des überbrückten LAN ein Datenrahmen von einem Client (C1, C2, C3), der mit dem überbrückten LAN verbunden ist, zu einem anderen Client (C1, C2, C3), der mit dem gleichen überbrückten LAN verbunden ist, passieren kann.

5. Verfahren nach Anspruch 1, 2, 3 oder 4, das ferner das Umsetzen eines Spanning Tree-Protokolls auf den Zugangselementen (ASR1, ASR2, ASR3, ASR4) umfasst, das Ports als Stammports, designierte Ports oder blockierte Ports ausweist, wobei der Schritt des Umsetzens ferner das Abbilden eines als eine Netz-Netz-Schnittstelle konfigurierten Ports als Stammport und eines als Anwender-Netz-Schnittstelle konfigurierten Ports als designierter Port oder blockierter Port umfasst.

6. Zugangselement (ASR1, ASR2, ASR3, ASR4) in einem System, das mehrere Zugangselemente (ASR1, ASR2, ASR3, ASR4) umfasst, die mit Hilfe eines überbrückten LAN verbunden sind, das ein Spanning Tree-Protokoll anwendet, um eine Root Bridge (Dist1) zu bestimmen,
wobei das Zugangselement Ports hat, die entweder als Netz-Netz-Schnittstellen für Ports, die zu der Root Bridge hin zeigen, oder als Anwender-Netz-Schnittstellen für Ports, die von der Root Bridge (Dist1) weg zeigen, konfiguriert sind, und
wobei das Zugangselement dafür konfiguriert ist, derart zu arbeiten, dass ein an einem Netz-Netz-Schnittstellenport empfangener Datenrahmen wenigstens an Anwender-Netz-Schnittstellen des Zugangselements (ASR1, ASR2, ASR3, ASR4) übergeben wird und ein an einem Anwender-Netz-Schnittstellenport empfangener Datenrahmen nur an Netz-Netz-Schnittstellen des Zugangselements (ASR1, ASR2, ASR3, ASR4) übergeben wird.

7. Zugangselement (ASR1, ASR2, ASR3, ASR4) nach Anspruch 6, wobei das Zugangselement (ASR1, ASR2, ASR3, ASR4) einen programmierbaren Router umfasst.

8. System, welches das Zugangselement (ASR1, ASR2, ASR3, ASR4) nach Anspruch 6 oder 7 umfasst, wobei es mehrere Zugangselemente (ASR1, ASR2, ASR3, ASR4) und Clients, die unmittelbar mit Anwender-Netz-Schnittstellen der Zugangselemente (ASR1, ASR2, ASR3, ASR4) in dem System verbunden sind, umfasst.

9. Zugangselement nach Anspruch 6 oder 7 oder System nach Anspruch 8, wobei das überbrückte LAN Verteilungsrouter umfasst, durch die es mit einem Netz, das weiter als das überbrückte LAN ist, verbunden ist, wobei die Verteilungsrouter dafür konfiguriert sind, jeglichen von einem Zugangselement (ASR1, ASR2, ASR3, ASR4) des überbrückten LAN empfangenen Datenrahmen nur zu dem weiteren Netz weiterzuleiten.

## Revendications

1. Procédé d'acheminement de trames de données depuis un élément d'accès (ASR1, ASR2, ASR3, ASR4) dans un réseau comprenant un réseau local ponté connectant de multiples éléments d'accès (ASR1, ASR2, ASR3 et ASR4) auxquels des clients (C1, C2, C3) se connectent et qui exploite un protocole de l'arbre recouvrant, le procédé comprenant :
l'exploitation du protocole de l'arbre recouvrant pour fournir une topologie exempte de boucle dans le réseau local ponté afin de déterminer un pont racine (Dist1) ;
- la configuration de ports sur l'élément d'accès soit en tant qu'interfaces réseau-réseau pour des ports orientés vers le pont racine, soit en tant qu'interfaces réseau-utilisateur pour des ports orientés à l'opposé du pont racine ;
dans lequel l'élément d'accès (ASR1, ASR2, ASR3, ASR4) est configuré pour
(i) lors de la réception d'une trame de données au niveau d'un port d'interface réseau-réseau de l'élément d'accès (ASR1, ASR2, ASR3, ASR4), faire passer la trame de données au moins à des interfaces utilisateur-réseau de l'élément d'accès (ASR1, ASR2, ASR3, ASR4) ; et
(ii) lors de la réception d'une trame de données au niveau d'un port d'interface utilisateur-réseau de l'élément d'accès (ASR1, ASR2, ASR3, ASR4), faire passer la trame de données uniquement à des interfaces réseau-réseau de l'élément d'accès (ASR1, ASR2, ASR3, ASR4).

2. Procédé selon la revendication 1, dans lequel le réseau local ponté comprend un domaine de couche 2 et est connecté à un réseau plus large que le réseau local ponté au moyen d'un routeur de distribution (Dist1, Dist2), auquel un élément d'accès (ASR1, ASR4) du domaine de couche 2 est connecté, le procédé comprenant :
- l'établissement du routeur de distribution (Dist1, Dist2) en tant que pont racine de réseau local ponté ;
- la réception d'une trame de données sur un port du routeur de distribution (Dist1, Dist2) en provenance d'une interface réseau-réseau d'un élément d'accès (ASR1, ASR4);
- l'acheminement de la trame de données vers un autre élément de réseau à l'extérieur du domaine de couche 2 de réseau local ponté.

3. Procédé selon la revendication 1, dans lequel la configuration des éléments d'accès (ASR1, ASR2, ASR3 et ASR4) et l'acheminement des trames de données sont tels qu'une trame de données peut ne pas passer d'un client (C1, C2, C3) connecté au réseau local ponté à un autre client (C1, C2, C3) connecté au même réseau local ponté sans avoir d'abord été dirigé à l'extérieur de ce réseau local ponté.

4. Procédé selon la revendication 2, dans lequel la configuration des éléments d'accès (ASR1, ASR2, ASR3, ASR4) et l'acheminement des trames de données sont tels qu'après l'acheminement de la trame de données vers un autre élément de réseau (ASR1, ASR2, ASR3, ASR4) à l'extérieur du domaine de couche 2 de réseau local ponté, une trame de données peut passer d'un client (C1, C2, C3) connecté au réseau local ponté à un autre client (C1, C2, C3) connecté au même réseau local ponté.

5. Procédé selon la revendication 1, 2, 3 ou 4, comprenant l'implémentation d'un protocole de l'arbre recouvrant sur les éléments d'accès (ASR1, ASR2, ASR3, ASR4) qui désigne des ports comme étant des ports racines, désignés ports ou ports bloqués, l'étape d'implémentation comprenant en outre le mappage d'un port configuré comme une interface réseau-réseau en tant que port racine, et d'un port configuré comme une interface utilisateur-réseau en tant que port désigné ou un port bloqué.

6. Elément d'accès (ASR1, ASR2, ASR3, ASR4) dans un système comprenant de multiples éléments d'accès (ASR1, ASR2, ASR3, ASR4) connectés au moyen d'un réseau local ponté exploitant un protocole de l'arbre recouvrant pour déterminer un pont racine (Dist1),
l'élément d'accès ayant des ports configurés soit en tant qu'interfaces réseau-réseau pour des ports orientés vers le pont racine, soit en tant qu'interfaces utilisateur-réseau pour des ports orientés à l'opposé du pont racine (Dist1) ; et
dans lequel l'élément d'accès est configuré pour fonctionner de sorte qu'une trame de données reçue au niveau d'un port d'interface réseau-réseau passe au moins à des interfaces utilisateur-réseau de l'élément d'accès (ASR1, ASR2, ASR3, ASR4) ; et qu'une trame de données reçue au niveau d'un port d'interface utilisateur-réseau passe uniquement à des interfaces réseau-réseau de l'élément d'accès (ASR1, ASR2, ASR3, ASR4).

7. Elément d'accès (ASR1, ASR2, ASR3, ASR4) selon la revendication 6, dans lequel l'élément d'accès (ASR1, ASR2, ASR3, ASR4) comprend un routeur programmable.

8. Système comprenant l'élément d'accès (ASR1, ASR2, ASR3, ASR4) selon la revendication 6 ou 7, comprenant de multiples éléments d'accès (ASR1, ASR2, ASR3, ASR4) et des clients connectés directement à des interfaces utilisateur-réseau des éléments d'accès (ASR1, ASR2, ASR3, ASR4) dans le système.

9. Elément d'accès selon la revendication 6 ou 7, ou système selon la revendication 8, dans lequel le réseau local ponté comprend des routeurs de distribution par lesquels il est connecté à un réseau plus large que le réseau local ponté, les routeurs de distribution étant configurés pour acheminer toute trame de données reçue depuis un élément d'accès (ASR1, ASR2, ASR3, ASR4) du réseau local ponté uniquement vers le réseau plus large.
